# EUROPEAN PATENT APPLICATION

(11) **EP 1 526 489 A1**
(43) Date of publication of application: **27.04.2005**
(21) Application number: 04254701.8
(22) Date of filing: 05.08.2004
(51) Int. Cl.: G07F 19/00

(54) **Self-service terminal with avatar user interface**

(30) Priority: 20.10.2003 GB 0324447
(71) Applicant: NCR INTERNATIONAL INC., Dayton, Ohio 45479 (US)
(72) Inventor: Black, Jonathan Simon, Dundee DD2 1BN (GB); Monaghan, Andrew, Dundee DD2 1DS (GB); Savage, John Gerad, Tayport Fife DD6 9BW (GB)
(74) Representative: Williamson, Brian

(57) **Abstract**

An automated teller machine (10) comprising means (30) for generating and presenting an avatar (36) to the user, wherein characteristics, such as facial expressions, of the avatar (36) are dependent on inputs from users and a customer relationship management system.

## Description

The present invention relates to a self-service terminal and network of such terminals for enabling a dialog between the terminal and a server environment. In particular, the invention relates to an automated teller machine or retail station that is able to communicate with a customer relationship management server.

Various approaches are currently available for enabling a dialog between self-service terminals and server environments. These allow a dialog controlled by the server to be presented to the consumer. As an example, it is sometimes desirable to allow ATMs to communicate with a customer relationship management server, which is able to provide personalised information to a customer, and/or advertising material that may be of interest. In existing systems information downloaded from the server is presented to the user in a text-based format, sometimes including images or pictures. Whilst this is very direct and unambiguous way to provide information, there is a need for a more sophisticated and responsive user interface.

According to a first aspect of the present invention there is provided a self-service terminal, such as an automated teller machine, comprising means for generating and presenting an avatar to the user. By using an avatar in an ATM environment to communicate information the overall experience for a user is simplified and enhanced. By avatar it is meant an image of a character and in particular animated character, such as an animation of a human being or an animal.

Preferably, the self-service terminal is adapted to receive user inputs and control one or more characteristics or features of the avatar based on those inputs. The characteristics or features may be facial expressions and/or hand movements or body movements.

Additionally or alternatively, the terminal may be configured to receive an input from a remote processor and control one or more features of the avatar based on that input. The remote processor may be associated with a customer relationship management system. The input from the remote processor may comprise personalised information for the user.

The self-service terminal may include means for generating speech simultaneously with the avatar.

Preferably, the means for generating an avatar is operable to generate one of a plurality of avatars. Preferably, the remote processor is operable to specify which one of the plurality of avatars should be presented to the user.

According to another aspect of the invention, there is provided a system comprising a self-service terminal that has means for generating and presenting an avatar to a user and a remote information provider for providing instructions for controlling or effecting one or more characteristics of the avatar.

Various aspects of the invention will now be described by way of example only and with reference to the accompanying drawings, of which:
Figure 1 is a block diagram of a network for providing personalised information to the user of an automated teller machine;
Figure 2 is a schematic and more detailed view of the system of Figure 1, and
Figure 3 is a view of the ATM of Figure 1 in use.

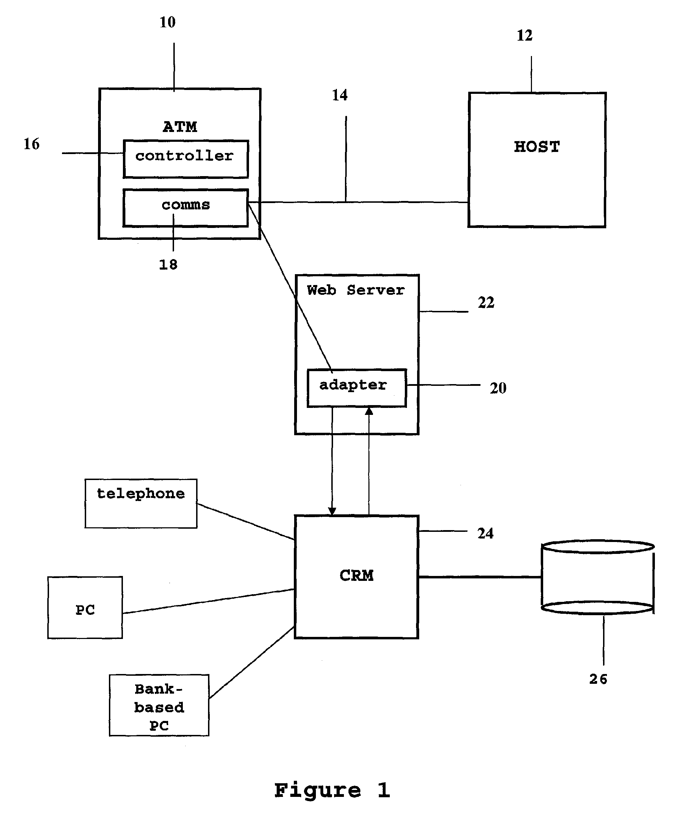

Figure 1 shows an ATM 10 that can communicate with a host via a network 14, typically a secure banking internet. As is standard, the host is able to provide authorisation and transactional information to the ATM to allow its standard transactional functionality to be performed, such as dispensing cash or receiving customer deposits. Provided in the ATM 10 is a main control application 16 that is operable to control most of the functionality of the terminal, such as communicating with the host, presenting information on screen (not shown) and responding to user key strokes or touch screen events or speech recognition software. Also included in the ATM 10 is a communication module 18 for establishing a communication link with the host and additionally a web service component or adaptor that is provided in a remote web server 22.

The web service adaptor is able to communicate with a CRM server 24, which is operable to provide services such as advertising information or customer personalisation details. Associated with the CRM server 24 is a relationship database 26, which contains information on currently available advertising campaigns as well as personal information relating to users of the ATM network. This personal information can be supplied via various different channels. As shown in Figure 1, the CRM server 24 can be accessed by a number of different channels, for example using a PC to gain online access, whether in a consumers home or in a banking environment or by telephone. In the latter case, although consumer access is via telephone, it will be appreciated that there has to be some form of PC interface to the CRM server. It should be noted that although in Figure 1 the web server 22 and the CRM server 24 are shown as being physically separate, this is a logical separation and both of these may be provided on the same machine.

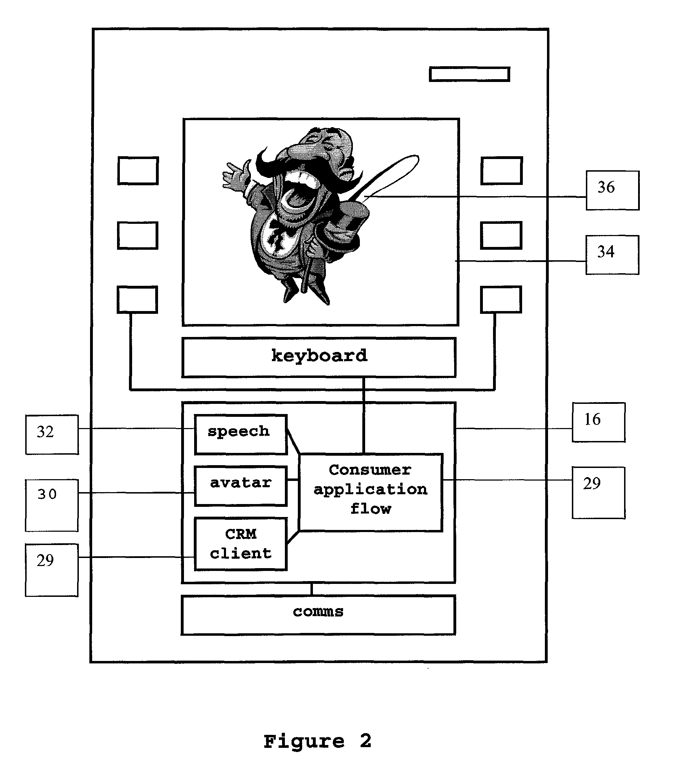

Figure 2 shows the ATM of Figure 1 in more detail. From this it can be seen that the control application 16 includes a consumer application for receiving and responding to user inputs 28, a CRM client application 29 for communicating with the CRM, and an avatar module 30, which is operable to generate an animated image for presenting on the screen of the ATM. Systems and methods for generating such animations are well known and so will not be described in detail. The ATM also includes a text to speech module 32 for generating speech simultaneously with the animated images, so that the impression can be created of a character that is conversing and interacting directly with the customer.

The avatar module 30 is operable to receive instructions from the ATM consumer application 28 and modify the character displayed on screen accordingly. The instructions from the consumer application 28 are typically dependent on the selections that a user makes. In order to personalise the user's experience, the instructions from the consumer application 28 are also responsive to signals or messages sent from the CRM. In either case, to accommodate this, the consumer application 28 is adapted to send commands to the avatar module 30 to cause any desired changes in any one or more features of the avatar presented. Likewise, commands are sent to the speech module 32 to cause appropriate speech to be generated. These commands can either be generated at the consumer application 28 in response to information from the CRM or merely passed from the CRM server to the avatar module 30 via the consumer flow application 28. Where the command is generated by the CRM, this will typically be in XML format, with the avatar and/or speech commands provided as an extension file or string of information.

As an example of a feature that may be changed in response to user input or commands from the CRM, the avatar module may be operable to generate a plurality of different types of character, each targeted for a different generation or category of customers. In this case, once the CRM has identified the customer and their age, then it could send a signal to the consumer flow application to instruct the avatar module 30 to present a selected one of the plurality of characters. Alternatively or additionally, each avatar may be associated with a set of actions, such as smile, wave, frown etc. Each action would have a name or some other form of identifier. In this case, the CRM may be able to specify within the XML script when to start and stop actions as appropriate. For example the CRM may be operable to specify whether the avatar should have facial expressions that are serious or whether the avatar should smile. Below is an example of a script that could be used to cause the avatar to smile once and then stop, although as will be appreciated, this could be modified depending on the arrangement between the avatar and its interface:
<speak>Hello, I am about to smile.<action name="smile"> Now I am smiling. </action name = "smile"> I am no longer smiling.</speak>
This structure allows more than one tag to be applied to the avatar at the same time. The avatar module 30 determines how to represent the instruction.

In use of the system of Figure 1, a user inserts his card into the ATM card slot and enters his personal identification number. As is standard, the ATM 10 seeks authorisation to provide financial information from the host 12. In the event that this is confirmed, the consumer flow application 28 opens communications with the CRM system 24 via the web server 22, and sends a signal identifying the user. At the same time, the consumer flow application 28 sends a message including user specific information, such as the customer's name, to the avatar module 30, together with a command to present a suitable avatar. This causes the avatar module 30 to generate and present on the ATM screen 34 an animated character 36 saying, for example, "Good morning Mr Black".

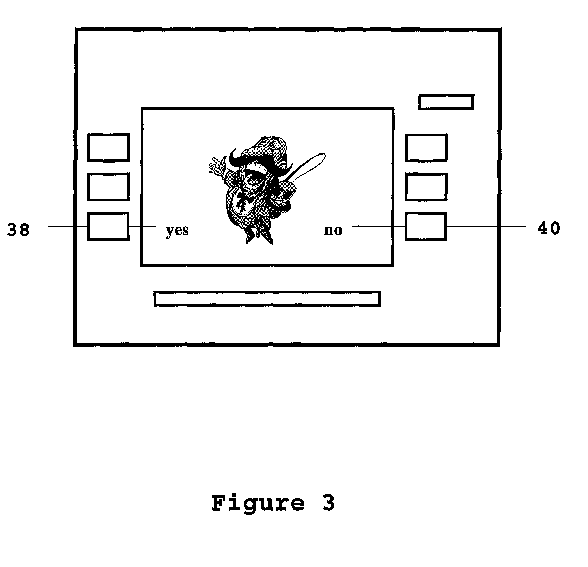

Once the CRM system 24 is notified that a particular customer is using the ATM 10, it is adapted to search its records and identify user specific information. For example, it may have a record that Mr Black always uses the £100 fast cash option. In this case, the CRM could be configured to send a command to the consumer flow application to cause the avatar and speech modules 30 and 32 to generate a character that asks "Would you like your usual £100 fast cash option?". Whilst the avatar is presented on screen, the consumer flow application would cause the presentation of on-screen options for allowing the user to respond. For example, as shown in Figure 3, one button on the ATM may be allocated to the response "yes" and another may be allocated to the response "no". As is standard, were the user to select yes, the fast cash transaction would be carried out. Once the cash is dispensed, the consumer flow application sends a command to the avatar module 30 to cause the avatar 36 to say "Thank you for using this terminal". In this way, by responding to user inputs and reacting to information from the CRM, the avatar 36 appears to react to and interact with the customer. This provides for a simplified and enhanced experience.

A skilled person will appreciate that variations of the disclosed arrangements are possible without departing from the invention. For example, whilst the CRM client application of Figure 2 is shown as communicating with the avatar via the consumer flow application, communication could be via any other suitable channel. Alternatively or additionally, whilst the avatar 36 described above is able to provide personalised instruction to the consumer, the CRM 24 could cause the avatar to present information relating to special financial offers, which offers are specifically targeted at the customer. Also, it is appreciated that some customers may not wish to be presented with an avatar. To this end, the CRM may be operable to send to the ATM a signal to prevent usage of the avatar. Alternatively, the system may be set up so that the default is that no avatar is used. In this case, an avatar would only be presented in response to specific instructions from the CRM. Accordingly, the above description of a specific embodiment is made by way of example only and not for the purposes of limitation. It will be clear to the skilled person that minor modifications may be made without significant changes to the operation described.

## Claims

1. A self-service terminal, such as an automated teller machine, comprising means for generating and presenting an avatar to a user.

2. A self-service terminal as claimed in claim 1 that is operable to receive user inputs and control one or more features of the avatar based on those inputs.

3. A self-service terminal as claimed in claim 1 or claim 2 that is operable to receive an input from a remote processor and control one or more features of the avatar based on that input.

4. A self-service terminal as claimed in claim 3, wherein the remote processor is associated with a customer relationship management system.

5. A self-service terminal as claimed in claim 3 or claim 4, wherein the input from the remote processor comprises personalised information for the user.

6. A self-service terminal as claimed in any of the preceding claims comprising means for generating speech simultaneously with the avatar.

7. A system comprising a self service terminal as claimed in any of the preceding claims and a remote information provider for providing instructions for controlling or effecting one or more characteristics of an avatar that is presented to a user.

8. A self-service terminal substantially as described herein before with reference to the accompanying drawings.
